# EUROPÄISCHE PATENTSCHRIFT

(11) **EP 1 637 266 B1**
(45) Veröffentlichungstag und Bekanntmachung des Hinweises auf die Patenterteilung: **01.04.2009**
(21) Anmeldenummer: 05015583.7
(22) Anmeldetag: 19.07.2005
(51) Int. Cl.: B23K 1/00, B23K 1/20, B23K 35/02, B23K 35/28, B23K 35/36, B22F 1/00

(54) **Verfahren zur Herstellung einer Lotverbindung zwischen Werkstücken unter Verwendung eines Lötels mit Nanopartikeln**
Process for achieving a soldering connection of workpieces using a solder with nanoparticles
Procédé de brasage de pièces à l'aide d'une brasure contenant des nanoparticules

(30) Priorität: 19.07.2004 DE 102004034815
(43) Veröffentlichungstag der Anmeldung: 22.03.2006
(73) Patentinhaber: Behr GmbH & Co. KG, 70469 Stuttgart (DE)
(72) Erfinder: Boger, Snjezana, Dr., 73734 Esslingen (DE); Englert, Peter, Dipl.-Ing. (FH), 74177 Bad Friedrichshall (DE); Pfitzer, Matthias, Dipl.-Ing. (FH), 73779 Deizisau (DE); Trautwein, Ingo, 74321 Bietigheim-Bissingen (DE); Türpe, Matthias, Dr.-Ing., 71672 Marbach a. N. (DE)
(74) Vertreter: Mantel, Berthold Friedrich

(56) Entgegenhaltungen:
- EP-A- 0 556 864
- EP-A- 0 605 323
- EP-A- 0 671 242
- EP-A- 0 718 061
- US-A- 5 964 963
- US-A1- 2004 050 913
- DATABASE WPI Section Ch, Week 200434 Derwent Publications Ltd., London, GB; Class L03, AN 2004-329600 XP002362869 -& JP 2004 146695 A (EBARA CORP) 20. Mai 2004 (2004-05-20)

## Beschreibung

Die vorliegende Erfindung betrifft ein Verfahren zum Verbinden von mindestens einem Grundwerkstoff mit Hilfe eines Lots zur Herstellung eines verbindbaren Werkstücks gemäß dem Oberbegriff des Anspruchs 1 (siehe, z.B. JP 2004/146695).

Verfahren zum Verbinden von insbesondere metallischen Grundwerkstoffen mit Hilfe eines geschmolzenen Zusatzmetalls, das heißt eines Lots, sind bekannt. Der Schmelzpunkt des Lots liegt unter dem der zu verbindenden Grundwerkstoffe, sodass diese vom Lot nur benetzt, nicht jedoch aufgeschmolzen werden. Derartige Verfahren, auch als Lötverfahren bekannt, zeichnen sich durch ein Ausbreiten des Lots auf der Werkstoffoberfläche auf und werden für einen Füge- oder Verbindungsprozess eingesetzt. Herkömmliche Lötverfahren, wie sie beispielsweise bei der Fertigung von Wärmetauschem eingesetzt werden, erfordern bei Einsatz der üblichen AlSi-Lote Arbeitstemperaturen von cirka 600°C. Eine derartige Temperatur liegt im Bereich der Solidustemperatur der eingesetzten Grundwerkstoffe. Die beschriebene Temperaturkonstellation erfordert einen sehr präzise und in hohem Maße reproduzierbar geführten Fertigungsprozess. Dieser wiederum führt zu erhöhtem zeitlichen und apparativen Aufwand mit den entsprechenden Kostenfolgen. Darüber hinaus ist es mittels der üblichen vergleichsweise hochschmelzenden Lote nicht möglich, höher legierte, insbesondere aushärtbare Aluminiumlegierungen als Werkstoffe einzusetzen, da deren Schmelzbereiche unter oder innerhalb des Schmelzbereiches der üblichen Lote liegt. Im Stand der Technik wurde versucht, mittels Zugabe von Germanium zu einer Schmelzpunktemiedrigung des Lotes zu gelangen. Derartige Untersuchungen sind auch für Lote auf Zink-Basis oder AISi-Lote mit Zinkzusatz bekannt. Die solche Lote einsetzenden Verfahren weisen jedoch hinsichtlich der Kosten und Verfahrensführung Nachteile auf.

Der vorliegenden Erfindung liegt daher das technische Problem zugrunde, verbesserte Verfahren zum Verbinden durch Löten, von Werkstoffen zur Verfügung zu stellen, die die vorgenannten Nachteile überwinden, insbesondere es ermöglichen, bisher dem Verbinden mittels herkömmlicher Lote nicht zugängliche Werkstoffe Verbindungsverfahren unter Verwendung eines Lots zuzuführen. Darüber hinaus ist es selbstverständlich auch wünschenswert, die im Stand der Technik bekannten Verbindungsverfahren kostengünstiger zu gestatten, das heißt den apparativen und zeitlichen Aufwand zu reduzieren, wobei gleichzeitig eine den üblichen Lötverfahren vergleichbare oder verbesserte Korrosionsbeständigkeit und/oder Festigkeit erzielt werden soll.

Die Erfindung ist in einem Verfahren gemäß Anspruch 1 definiert.

Die Erfindung macht sich zunutze, dass die Verwendung von Staubpartikeln einer besonders geringen Größe zu einer Verringerung der Schmelztemperatur des Lots führt. Das Aufschmelzen der Staubpartikel als vorliegenden Zusatzwerkstoffen, also für das Löten, kann erfindungsgemäß bei geringeren Temperaturen als üblich erfolgen. Dies hat einerseits Kostenvorteile zur Folge, da sich erfindungsgemäß unter Einsatz des vorliegenden Verfahrens eine Reduzierung von Zeit- und Energieeinsatz, insbesondere von Löttemperatur und -zeit erreichen lässt. Durch einen größeren Abstand zwischen der Schmelztemperatur des Lots und der Solidustemperatur des Grundwerkstoffs vereinfacht sich der Lötprozess, da das Aufschmelzen und Erstarren des Lots während eines einzigen Temperaturanstiegs unterhalb der Solidustemperatur des Grundwerkstoffs stattfindet, insbesondere mehr als 20°C, bevorzugt mehr als 50°C und besonders bevorzugt mehr als 80°C unterhalb der Solidustemperatur des Grundwerkstoffs.

Die erfindungsgemäße Vorgehensweise ermöglicht andererseits einen stabileren Lötprozess und den Einsatz von Grundwerkstoffen, die bisher einem Fügeprozess unter Zuhilfenahme von Loten üblicher Zusammensetzung nicht zugänglich waren, da deren Schmelztemperaturen innerhalb oder unterhalb des Bereichs der üblicherweise verwendeten Lote liegt. Die erfindungsgemäß vorgesehene Verwendung von Staubpartikeln einer Partikelgröße kleiner 1 Mikrometer zum Verbinden von Grundwerkstoffen resultiert überraschenderweise in einer den üblichen Lötverfahren vergleichbaren Festigkeit. In bevorzugter Ausführungsform der vorliegenden Erfindung liegt der Schmelzbereich der Lote, wie sie in der vorliegenden Erfindung verwendet werden, in einem Bereich von 300°C bis 580°C, vorzugsweise 350°C bis 500°C und insbesondere 400°C bis 460°C. Die vorliegende Erfindung ermöglicht also das stoffschlüssige Fügen von Werkstoffen bei niedrigeren Temperaturen für das Schmelzen des Lots als üblich, zum Beispiel bei 300°C bis 580°C, vorzugsweise 350°C bis 500°C und insbesondere 400°C bis 460°C, wobei vorteilhafterweise unter Einsatz verminderter Fügetemperaturen Werkstoffe und Lote an sich bekannter chemischer Zusammensetzung eingesetzt werden können. Vorteilhafterweise ergeben sich Eigenschaften der erhaltenen Werkstücke, insbesondere die Warmfestigkeit, die den üblichen Lötverbindungen entsprechen.

Im Zusammenhang mit der vorliegenden Erfindung wird unter einem Grundwerkstoff ein zu fügender Werkstoff verstanden, der mindestens ein Nichtmetall, Halbmetall und/oder Metall enthält, im Wesentlichen enthält oder aus diesem besteht, wobei dieser Werkstoff auch aus Legierungen oder Verbindungen der vorgenannten Werkstoffe bestehen oder diese enthalten kann. In einer bevorzugten Ausführungsform der vorliegenden Erfindung ist der Grundwerkstoff aus Aluminium oder einer oder mehreren Aluminiumlegierungen aufgebaut, das heißt besteht aus Aluminium oder einer oder mehreren Legierungen oder enthält Aluminium oder eine oder mehrere Aluminiumlegierungen im Wesentlichen, zum Beispiel in Anteilen zu mindestens 50, 60, 70, 80, 90, 95 und insbesondere 99 Gew.-%, bezogen auf das Gewicht des Grundwerkstoffs.

Im Zusammenhang mit der vorliegenden Erfindung wird unter einem Werkstück ein Grundwerkstoff der vorgenannten Art verstanden, der mittels des erfindungsgemäßen Verfahrens gelötet wurde. Grundwerkstoff gemäß der Erfindung ist entweder ein Wärmetauscher oder ein Coil.

Im Zusammenhang mit der vorliegenden Erfindung werden unter Staubpartikeln Partikel aus den nachstehend definierten Materialien verstanden, die eine Partikelgröße kleiner 1 Mikrometer, insbesondere kleiner 0,5 Mikrometer, vorzugsweise kleiner 0,1 Mikrometer, besonders bevorzugt 0,01 bis 0,05 Mikrometer aufweisen, das heißt auch als Submikropartikel bezeichnet werden können. In bevorzugter Ausführungsform handelt es sich um Submikrophasenmaterialien mit einen Komdurchmesser unter 0,1 Mikrometern, insbesondere 0,05 Mikrometern. Derartige Staubpartikel lassen sich beispielsweise durch Gasphasenabscheidung oder auf andere bekannte Weise herstellen.

Die vorliegende Erfindung betrifft also in einer bevorzugten Ausführungsform ein vorgenanntes Verfahren zum Verbinden von Grundwerkstoffen, wobei die eingesetzten Staubpartikel kleiner 0,5, insbesondere kleiner 0,1 Mikrometer sind.

Gemäß der Erfindung sind die verwendeten Staubpartikel ausgewählt aus der Gruppe bestehend aus Staubpartikeln aus Metall, Staubpartikeln aus Metallverbindungen, Staubpartikeln aus Halbmetallen, Staubpartikeln aus Mischmetallen, Staubpartikeln aus Mischmetallverbindungen, Staubpartikel aus Halbmetallverbindungen, Staubpartikel aus nichtmetallischen Verbindungen, Staubpartikel aus Flussmitteln, Staubpartikeln aus CAB-Flussmitteln (CAB: controlled atmosphere brazing).

Die Staubpartikel werden beispielsweise durch eine organische Matrix, zum Beispiel mit oder aus einem Polymer oder während der Herstellung durch organische Liganden ummantelt. Solche Verfahren sind grundsätzlich bereits bekannt.

Gemäß der Erfindung werden Staubpartikel aus mindestens zwei verschiedenen Materialien auf dem mindestens einen Grundwerkstoff aufgebracht.

In einer bevorzugten Ausführungsform der vorliegenden Erfindung liegen die vorhandenen Staubpartikel in stabilisierter Form vor.

In einer bevorzugten Ausführungsform ist vorgesehen, dass die Staubpartikel vor dem Aufbringen auf den mindestens einen Grundwerkstoff in einem organischen Trägermittel verteilt, vorzugsweise gleichmäßig verteilt werden, wobei anschließend die in dem organischen Trägermittel verteilten Staubpartikel auf den mindestens einen Grundwerkstoff beispielsweise mittels Sprühen, Tauchen oder Walzen aufgebracht werden. Die Erfindung sieht in einer vorteilhaften Ausgestaltung vor, als organische Trägermittel in einer anorganischen, vorzugsweise wässrigen, und/oder organischen Matrix enthaltene Polymere einzusetzen. Vorteilhafterweise wird in einer bevorzugten Ausführungsform vorgesehen, dass die Polymere Polyurethane, Kunstharze, Phthalate, Acrylate, Vinylharze, Silikonharze und/oder Polyolefine sind.

Gemäß der Erfindung werden die Staubpartikel auch direkt auf den mindestens einen Grundwerkstoff mittels thermische Spritz- oder Plasmaspritzverfahren aufgetragen.

Gemäß der Erfindung ist vorgesehen, dass der erste Verfahrensschritt, das heißt das Aufbringen der Staubpartikel auf dem mindestens einen Grundwerkstoff, zeitgleich mit dem zweiten Verfahrensschritt, das heißt dem Aufschmelzen der Staubpartikel auf dem Grundwerkstoff, abläuft. Die Erfindung betrifft in ein Verfahren zum Verbinden von mindestens einem Grundwerkstoff mit Hilfe eines Lots, wobei sich die eingesetzten Staubpartikel erst während des Aufschmelzprozesses aus geeigneten Ausgangsverbindungen bilden.

Die Erfindung betrifft auch die Verwendung der vorstehend definierten Staubpartikel einer Partikelgröße kleiner 1 Mikrometer, vorzugsweise kleiner 0,5 Mikrometer, insbesondere kleiner 0,1 Mikrometer, insbesondere kleiner 0,05 Mikrometer zum Verbinden, insbesondere Löten von mindestens einem Grundwerkstoff.

## Patentansprüche

1. Verfahren zum Verbinden von mindestens einem Grundwerkstoff mit Hilfe eines Lotes zur Herstellung eines Werkstückes, wobei das Werkstück in Form eines Coils oder eines Wärmetauschers vorliegt wobei in einem ersten Verfahrensschritt Staubpartikel einer Partikelgröße kleiner 1 Mikrometer auf den Grundwerkstoff aufgebracht, in einem zweiten Verfahrensschritt unter Bildung des Lots aufgeschmolzen werden und ein verbindbares Werkstück erhalten wird **dadurch gekennzeichnet, daß** in dem ersten Verfahrensschritt Staubpartikel aus mindestens zwei verschiedenen Materialien aufgebracht werden, wobei die Staubpartikel ausgewählt sind aus der Gruppe bestehend aus Staubpartikeln aus Metall, Staubpartikeln aus Metallverbindungen, Staubpartikeln aus Halbmetallen, Staubpartikeln aus Halbmetallverbindungen, Staubpartikeln aus Mischmetallverbindungen, Staubpartikeln aus nichtmetallischen Verbindungen, aus Flussmittel oder aus CAB-Flussmittel, wobei die Staubpartikel in dem ersten Verfahrensschritt mittels eines Spritzverfahrens aufgebracht werden, wobei das Spritzverfahren ein thermisches Spritzverfahren oder Plasmaspritzverfahren ist, wobei der erste und zweite Verfahrenschritt gleichzeitig erfolgen und die Staubpartikel während des Aufschmelzens aus geeigneten Ausgangsverbindungen gebildet werden.

2. Verfahren nach Anspruch 1, wobei die Staubpartikel eine Partikelgröße kleiner 0,5 Mikrometer aufweisen.

3. Verfahren nach Anspruch 1 oder 2, wobei die Staubpartikel eine Partikelgröße kleiner 0,1 Mikrometer, insbesondere kleiner 0,05 Mikrometer aufweisen.

4. Verfahren nach einem der vorhergehenden Ansprüche, wobei die Ausgangsverbindungen metallorganische Verbindungen sind.

5. Verfahren nach einem der vorhergehenden Ansprüche, wobei die metallorganische Verbindung eine Silizium-, Aluminium-, Zirkon- und/oder Titan-haltige Verbindung ist.

6. Verfahren nach einem der vorhergehenden Ansprüche, wobei der zweite Verfahrensschritt bei einer Temperatur von 300°C bis 580°C, vorzugsweise 350°C bis 500°C, und insbesondere 400°C bis 460°C durchgeführt wird.

## Claims

1. Method for joining at least one base material with the aid of a solder for producing a workpiece, wherein dust particles with a particle size of less than 1 micron are applied to the base material in a first process step and are fused on in a second process step while forming the solder, resulting in a joinable workpiece, **characterised in that** dust particles of at least two different materials are applied in the first process step, wherein the dust particles are selected from the group including dust particles of metal, dust particles of metal compounds, dust particles of semi-metals, dust particles of semi-metal compounds, dust particles of mixed metal compounds, dust particles of non-metal compounds, fluxes or CAB fluxes, wherein the dust particles are applied in the first process step by means of a spraying process, the spraying process being a thermal or plasma spraying process, the first and second process steps running simultaneously and the dust particles being formed from suitable starting compounds in the fusion process, the workpiece being a coil or a heat exchanger.

2. Method according to claim 1, wherein the dust particles have a particle size of less than 0.5 micron.

3. Method according to claim 1 or 2, wherein the dust particles have a particle size of less than 0.1 micron, in particular less than 0.05 micron.

4. Method according to any of the preceding claims, wherein the starting compounds are organometallic compounds.

5. Method according to any of the preceding claims, wherein the organometallic compound is a compound containing silicon, aluminium, zirconium, and/or titanium.

6. Method according to any of the preceding claims, wherein the second process step is carried out at a temperature of 300°C to 580°C, preferably 300°C to 500°C and in particular 400°C to 460°C.

## Revendications

1. Procédé d'assemblage d'au moins un matériau de base, à l'aide d'un brasage, pour la fabrication d'une pièce à usiner, où la pièce à usiner se présente sous la forme d'un feuillard ou d'un échangeur de chaleur, où, au cours d'une première étape du procédé, des particules de poussière, dont la taille des particules est inférieure à 1 micron, sont appliquées sur le matériau de base, au cours d'une deuxième étape du procédé sont fondues par formation du brasage, et l'on obtient une pièce à usiner pouvant être assemblée,
**caractérisé en ce que,** au cours de la première étape du procédé, sont appliquées des particules de poussière provenant d'au moins deux matériaux différents, où les particules de poussière sont sélectionnées à partir du groupe se composant de particules de poussière de métal, de particules de poussière d'assemblages de métaux, de particules de poussière de demi-métaux, de particules de poussière d'assemblages de demi-métaux, de particules de poussière d'assemblages de mischmétal, de particules de poussière d'assemblages non métalliques, d'un fondant ou d'un fondant de brasage sous atmosphère contrôlée, où les particules de poussière, au cours de la première étape du procédé, sont appliquées au moyen d'un procédé par projection, où le procédé par projection est un procédé par projection thermique ou bien un procédé par projection au plasma, où la première et la deuxième étapes du procédé se produisent en même temps, et les particules de poussière sont formées au cours de la fusion, à partir d'assemblages de départ appropriés.

2. Procédé selon la revendication 1, où les particules de poussière présentent une taille de particule inférieure à 0,5 micron.

3. Procédé selon la revendication 1 ou 2, où les particules de poussière présentent une taille de particule inférieure à 0,1 micron, en particulier inférieure à 0,05 micron.

4. Procédé selon l'une quelconque des revendications précédentes, où les assemblages de départ sont des assemblages organométalliques.

5. Procédé selon l'une quelconque des revendications précédentes, où l'assemblage organométallique est un assemblage contenant du silicium, de l'aluminium, du zirconium et / ou du titane.

6. Procédé selon l'une quelconque des revendications précédentes, où la deuxième étape du procédé est exécutée à une température comprise entre 300°C et 580°C, de préférence entre 350°C et 500°C et, en particulier, entre 400°C et 460°C.
